# FASCICULE DE BREVET EUROPEEN

(11) **EP 1 926 603 B1**
(45) Date de publication et mention de la délivrance du brevet: **05.12.2012**
(21) Numéro de dépôt: 06790463.1
(22) Date de dépôt: 22.09.2006
(51) Int. Cl.: B41M 5/26, H01S 3/00

(54) **Procédé de marquage interne par laser dans les matériaux transparents**
Verfahren zur inneren Lasermarkierung in durchsichtigen Materialien
Method for internal laser marking in transparent materials

(30) Priorité: 22.09.2005 BE 200500463
(43) Date de publication de la demande: 04.06.2008
(73) Titulaire: Trackinside, Société Anonyme, 4031 Angleur (BE)
(72) Inventeur: KUPISIEWICZ Axel, 4130 Tilff (BE); MOTTAY Eric, 33130 Begles (FR)
(74) Mandataire: Donné, Eddy
(86) Numéro de dépôt international: PCT/BE2006/000105
(87) Numéro de publication internationale: WO 2007/033445

(56) Documents cités:
- EP-A- 1 535 697
- US-A1- 2003 039 765
- US-A1- 2003 156 605
- US-A1- 2004 032 566
- US-A1- 2004 114 641
- US-A1- 2005 073 748
- US-A1- 2005 111 500
- US-B1- 6 885 683

## Description

L'invention concerne un procédé industriel de marquage interne par laser dans les matériaux transparents.

Le marquage laser est une méthode clef exigée pour l'identification, la traçabilité et l'anti-contrefaçon des produits.

Pour des matériaux transparents, les technologies laser actuelles (YAG ns - Grenat d'Yttrium Aluminium) ne répondent pas aux exigences industrielles. Récemment, une technologie laser de laboratoire, appelée Ti:Sa sur base de cristaux de saphir dopés par des ions Titane, a montré des résultats prometteurs pour graver des matériaux avec des impulsions femtosecondes, c'est-à-dire des impulsions de l'ordre de 10⁻¹⁵ secondes, pour la création de guide d'ondes, mais rencontre encore des problèmes importants pour son industrialisation liés à la vitesse de production, la fiabilité, le prix, etc., ainsi que pour la durée de vie des marquages.

A partir des années 90, les lasers YAG sont de plus en plus utilisés dans l'industrie pour remplacer les étiquettes et l'impression à l'encre sur les matériaux opaques comme les métaux et les plastiques. Ces lasers peuvent être utilisés en mode continu (CW) ou en mode déclenché (Q-Switch) pour créer des impulsions longues à haute fréquence. Ils utilisent des phénomènes thermiques pour enlever la matière par gravure de surface ou pour changer la couleur de la surface du matériau, dit marquage "thermo-directe".

Les longueurs d'onde des lasers industriels YAG sont malheureusement dans la gamme visible ou proche infrarouge et ne peuvent pas interagir efficacement avec les matériaux transparents pour obtenir des phénomènes thermiques comme sur les matériaux opaques. Ils ne sont donc pas adaptés pour des pièces transparentes.

Pour graver les matériaux transparents, les lasers CO2 sont utilisés parce que leur longueur d'onde de 10,6µm permet l'absorption de l'énergie sur la surface du verre.

Ces lasers ont néanmoins les problèmes importants suivants:
- l'ablation de la matière sur la surface du matériau fragilise le produit, ce qui fait qu'ils ne peuvent pas être employés dans une large gamme d'applications ;
- les codes gravés, parce qu'ils sont sur la surface, peuvent être altérés par d'autres traitements pendant la production ou le transport, ou effacés délibérément afin d'éviter le contrôle ou la protection anti-fraude ; et,
- la résolution est très basse en raison de la longueur d'onde élevée et des dommages thermiques, ce qui fait que les codes doivent alors être larges ce qui ne permet pas des codes invisibles pour des applications d'anti-fraude.

À la fin des années 90, le développement des lasers de YAG à impulsions courtes autour de 10ns, permet de créer des microfissures à l'intérieur des matériaux en focalisant l'énergie concentrée dans un seul point. Cette densité importante d'énergie dans un temps très court dépasse le seuil de dommages des matériaux et mène à la création de microfissures de 50 à 100µm de diamètre à l'intérieur du verre. Cette technologie permet donc de graver des formes 3D dans le verre ou le PMMA, basés sur un ensemble de microfissures.

Cependant, ces gravures résultantes montrent les limitations importantes suivantes pour beaucoup d'applications industrielles comme la décoration de verre, les gravures antifraude ou marquage normatif:
■ le traitement n'est pas possible pour les matériaux très fins ou soumis à des contraintes internes ou externes puisque la durée d'impulsion est assez longue pour produire des effets thermiques et des fissures, qui peuvent à leur tour fragiliser le matériau ce qui est totalement interdit dans l'industrie chimique et pharmaceutique (verre de classe 1) et qui est à éviter pour d'autres contenants en verre, comme les bouteilles de parfums ou de vins par exemple qui doivent résister à de fortes contraintes de transport, telles que variations de température, vibrations, et chocs, qui mèneraient à une accroissement critique des microfissures et probablement à la rupture de la bouteille;
■ les tailles de gravure sont assez grandes, ce qui a pour inconvénient que les codes à barres doivent être assez larges, voir quelques millimètres carrés, pour contenir des informations lisibles;
■ les contrastes des gravures résultantes exigent, pour des applications d'antifraude et normatives, l'implémentation de systèmes de vision sophistiqués et un éclairage spécial pour lire les signatures gravées, vu leur contraste résultant limité de moins de 30%;
■ la gravure de formes complexes exige quelques milliers de "micropoints" par cm³, menant à des durées de traitement de plusieurs dizaines de secondes, les lasers YAG pulsés ayant une fréquence d'impulsion comprise entre 500 et 2000 hertz, ce qui résulte dans le fait que la productivité de la décoration interne avec ces lasers YAG est encore basse pour l'industrie de la décoration du verre; et,
■ pour la décoration et les applications de marquage antifraude ou normatif, la qualité de gravure est altéré par la fluctuation de la qualité du verre traité, ce qui entraîne que les interactions laser/verre avec de tels défauts peuvent mener à des marquages de mauvaises qualité et illisibles.

Le tableau en dessous donne un résumé des technologies lasers actuelles.

| **Technologie Laser** | **Type de procédé** | **Limitations** |
|---|---|---|
| CO2 cw ou QCW | Gravure de surface | Fragilise le matériau, très basse résolution, peut être altéré ou effacé |
| YAG cw ou QCW | Gravure de surface | Pas approprié pour des matériaux transparents |
| YAG pulsé (ns) | Gravure interne | Fragilise le matériau, basse résolution, pas assez rapide, trop dépendant de la qualité du matériau, nécessité d'un système de vision très coûteux |

Jusqu'au début des années 90, les lasers ultrarapides, également appelés femtosecondes avec un durée d'impulsion inférieure à une picoseconde, c'est-à-dire 10⁻¹² seconde, étaient des lasers de laboratoire sophistiqués et fragiles exigeant des scientifiques hautement qualifiés pour son fonctionnement.

Une première génération de lasers commerciaux ultrarapides, utilisant le saphir dopé par titane (Ti:Sapphire) comme matériau actif, a été présentée au début des années 90, permettant à d'autres chercheurs dans différents domaines tels que biologie, chimie, spectroscopie, de tirer profit de la durée très courte d'impulsion. Ils ont pu en tirer des résultats novateurs, d'une qualité scientifique élevée. Par exemple, le prix Nobel de chimie de 1999 a été attribué au Pr. Ahmed Zewail, de l'université de Stanford, pour son travail sur la "femtochimie", moins de 10 ans après que le premier laser femtoseconde ait été commercialisé.

Cette première génération de lasers femtosecondes, bien que parfaitement adaptée à un environnement de recherches, présente des limitations qui les empêchent d'être utilisés dans un environnement industriel.

En raison de la structure spectroscopique du Ti:Sapphire, un ou plusieurs lasers intermédiaires additionnels sont exigés dans un laser femtoseconde Ti:Sapphire. Ces lasers intermédiaires, étant sophistiqués et chers, s'ajoutent au coût global du système, et diminuent sa fiabilité.

Deux avancées technologiques, notamment la technologie du pompage par diodes et les nouveaux matériaux lasers, ouvrent la voie à une nouvelle génération de lasers ultrarapides qui présentent des performances élevés, sont plus compacts, plus fiables et moins chers que les lasers femtosecondes actuels.

En ce qui concerne la technologie du pompage par diodes, l'industrie du laser a subi pendant environ une décennie une mutation technologique semblable au remplacement des tubes à vide par des semi-conducteurs dans l'industrie électronique. N'importe quel laser tire sa puissance d'une source d'énergie extérieure. Traditionnellement, cette source d'énergie était une lampe flash ou un tube à vide, rempli d'un gaz ionisé. La disponibilité croissante des lasers de puissance à semi-conducteur (diodes laser) comme sources d'énergie offre des avantages énormes en termes de taille, durée de vie et fiabilité. Cependant, ces nouveaux composants ne peuvent pas être utilisés sur les lasers Ti:Sapphire femtosecondes, en raison des propriétés du Ti:Sapphire dont le cristal n'a aucune bande d'absorption dans la gamme de longueurs d'onde des diodes laser de puissance. Le laser Ti:Sapphire ne peut pas tirer avantage de la révolution du pompage par diodes.

En ce qui concerne les nouveaux matériaux lasers, les récentes avancées dans la croissance des cristaux laser ont mené à une nouvelle génération de cristaux, en utilisant l'ytterbium comme dopant actif, qui présentent une excellente qualité optique et sont entièrement compatibles avec les diodes laser haute puissance de classe télécoms.

Une autre géométrie intéressante utilisant l'ion Ytterbium est la fibre dopée Ytterbium. En effet, les amplificateurs à fibre à grand coeur permettent d' atteindre des performances très intéressantes dans le cadre de l'invention.

Le pompage direct de matériaux dopés Ytterbium par diodes ouvre la voie à une nouvelle génération de lasers ultrarapides, avec une compacité, une fiabilité, et une rentabilité améliorées.

Les principaux avantages que cette nouvelle génération de laser apporte à l'invention sont la vitesse de traitement et la fiabilité industrielle.

Concernant la vitesse de traitement, les lasers femtosecondes actuels sont limités à environ 1-5 kHz. Le laser utilisé dans le cadre de l'invention par contre a un taux minimum de répétition de 10 kHz, allant jusqu'à 1 MHz. Ceci se traduira immédiatement en vitesse de traitement plus élevée, ce qui est d'une importance extrême pour la productivité industrielle.

Concernant la fiabilité industrielle, les lasers femtosecondes actuels (Ti:Sa) intègrent au moins un laser intermédiaire nanoseconde pour le pompage optique, tandis que le laser utilisé dans le procédé selon l'invention ne nécessite aucun laser additionnel.

Un autre avantage intéressant est que les diodes laser utilisées pour pomper l'Ytterbium ont une longueur d'onde d'émission autour de 980 nm, identique à la longueur d'onde utilisée dans les applications de télécommunications optique. Grâce aux considérables développements apportés dans ce domaine, nous pouvons maintenant profiter d'une excellente source de diodes laser de haute puissance et de haute fiabilité.

L'efficacité quantique du pompage optique est définie comme étant le rapport entre la longueur d'onde de pompe et la longueur d'onde du laser. Plus l'efficacité quantique est grande, plus la chaleur indésirable générée par le laser est faible.

Le tableau ci-dessous permet de comparer l'efficacité quantique des lasers femtosecondes actuelles et des lasers femtosecondes Ytterbium.

| | Longueur d'onde de pompe | Longueur d' onde Laser | Efficacité quantique |
|---|---|---|---|
| Lasers fs actuels | 532 nm | 800 nm | 65% |
| Lasers fs Ytterbium | 980 nm | 1030 nm | 95% |

En raison de cette haute efficacité quantique et cette faible quantité de chaleur générée, les lasers Ytterbium ont un excellent potentiel pour augmenter le taux de répétition et la puissance moyenne.

Enfin, comparé aux systèmes amplifiés femtosecondes actuels, vu le petit nombre de diodes utilisées dans les lasers Ytterbium, les niveaux de tension et de courant exigés sont bas, ce qui implique de faibles dimensions de l'alimentation en puissance, une consommation électrique basse, de faibles coûts de remplacement et d'utilisation.

Pour le marquage, les lasers femtosecondes offrent une alternative intéressante grâce à leur durée d'impulsion ultracourte. Leur densité optique extrêmement élevée rend l'interaction avec l'échantillon à marquer très efficace, même pour des matériaux transparents. Leur durée d'impulsion ultracourte évite l'apparition d'effets thermiques durant l'interaction, ce qui rend la qualité du marquage excellente.

Depuis plusieurs années, les lasers Ti:Sapphire femtosecondes ont démontré leurs capacités à graver à l'intérieur du verre pour créer des guides d'ondes.

Des changements de couleur ont également été démontrés dans du plastique, mais ils ne sont pas permanents dans le verre.

Le procédé décrit dans ce brevet utilise un nouveau type de sources laser femtosecondes (pompées par diodes) permettant d'atteindre une productivité et une fiabilité industrielle et avec une technique spéciale permettant de marquer directement à l'intérieur de matériaux transparents des codes permanents avec un fort contraste.

Le procédé selon l'invention crée des identifications et des codes visibles ou invisibles qui ne peuvent pas être modifiés facilement ou effacés et qui sont créés à l'intérieur du matériau sans ajouter de composés spéciaux à l'intérieur ou sur le produit, et permet le marquage à n'importe quelle profondeur dans le matériau transparent, par exemple à l'intérieur d'un substrat en verre ou au milieu d'une feuille de verre de 6 mm, et pas uniquement proche de la surface et cela sans créer de petits changements structurels internes tels que micro-ablations ou petites bulles dues à l'augmentation très rapide de la température ou de structures diffusantes sous forme de parties blanchies et sans être limité à certains matériaux comme certaines application dans le domaine du marquage d'objets formés de matériaux en résine.

A cette fin l'invention concerne un procédé de marquage interne par laser dans les matériaux transparents, par exemple pour le marquage d'un identifiant pour un objet en matière transparente, caractérisé en ce que un dispositif est utilisé comprenant une source laser femtoseconde pompée par diodes qui est un amplificteur régénatif femtoseconde et n'utilise pas d'amplification à dérive de fréquence; une tête galvanométrique; une optique de focalisation et un système de contrôle pour le marquage non agressif avec un haut contraste pour générer des impulsions laser qui sont successivement focalisées sur différents points du marquage à réaliser et permettant de réaliser des marquages transparents à grande vitesse, supérieure à 0,1 mm² par seconde par modification local de l'indice de réfraction du matériau transparent de manière à ce que les modulations d'indices créés par l'effet d'auto-focalisation du faisceau sont d'amplitude variable selon la direction longitudinale, c'est-à-dire selon la direction de propagation des impulsions laser, de manière à ce que le remplissage de l'identifiant est une structure diffractive différente d'un réseau Bragg.

Les vitesses de marquage obtenues avec le procédé selon l'invention sont pleinement compatibles avec les productivités demandées dans les secteurs industriels. Par exemple, un laser femtoseconde avec une puissance moyenne de moins de 1 Watt permet de graver des codes 2D de 16 lignes x 16 colonnes lisibles par caméra en moins de 0,05s.

Cette cadence est typique des besoins en traçabilité en vue du suivi de la production et du suivi des circuits de distribution de l'industrie pharmaceutique (production de 20 fioles par seconde). Ces cadences typiques peuvent être obtenues par le procédé objet de cette invention en utilisant un laser femtoseconde pompé par diode, utilisant un amplificateur régénératif mais pas d'amplification à dérive de fréquence ou d'amplification parabolique.

L'utilisation d'une telle source laser utilisant un amplificateur régénératif seul et n'utilisant pas d'amplification à dérive de fréquence ou d'amplification parabolique, tous les deux nécessitant un compresseur d'impulsions après le dernier stade d'amplification, permet une moindre complexité, une fiabilité et un prix plus intéressant pour le secteur industriel, en comparaison avec par exemple par la source laser décrite dans la demande de brevet US 2003/0156605.

De préférence l'impulsion laser femtoseconde crée une modification de l'indice de réfraction du matériau transparent dans les points focalisés ou dans leur périphérie.

De cette manière la présente invention solutionne les problèmes de marquage interne de matériaux transparents, de manière sûre et fiable, avec un nouveau type de sources laser femtoseconde pompées par diodes par la création de changement d'indice de réfraction, ouvrant la voie à des designs particuliers, et à des marquages de codes à haute résolution.

Il est à noter que la modification de l'indice de réfraction réalisée par le procédé selon l'invention est différente de l'effet diffractif présenté dans le brevet US 2005/0073748.

En effet, l'effet diffractif présenté dans le brevet US 2005/0073748 est expliqué par une modulation de l'indice de réfraction construisant un réseau de Bragg. Les inventeurs démontrent expérimentalement que la distribution spatiale d'indice de réfraction est constituée d'une superposition de profils de type sinus selon la direction transverse X. Ils l'interprètent à l'aide de la théorie simplifiée des ondes couplées due à Kogelnik. Cette dernière suppose et n'est d'ailleurs valide que si la modulation de l'indice est constante selon la direction longitudinale Z. Par ailleurs cette théorie n'est strictement applicable dans ce cas qu'à des réseaux de Bragg avec une densité de lignes plus élevée que celle produite couramment avec le procédé selon la présente invention, c'est-à-dire une densité supérieure à 500 traits/mm.

Les modulations d'indice à fonction diffractive faites par le procédé selon la présente invention sont, par contre, d'amplitude fortement variable selon la direction longitudinale (direction de propagation du faisceau ou direction Z du brevet 2005/0073748).

Cette inhomogénéité est particulièrement renforcée par l'auto-focalisation du faisceau laser qui modifie de manière spatialement non linéaire la modulation d'indice dans la région de focalisation. Une telle distribution de modulation d'indice est totalement différente de celle présentée dans le brevet US 2005/0073748. Entre autres, elle ne constitue plus un réseau de Bragg et nécessite l'utilisation de modèles d'ondes couplées rigoureuses pour sa description. Ces modèles mettent d'ailleurs en évidence des comportements diffractifs très différents de ceux obtenus par des réseaux de Bragg, tels que la diffraction multi-ordre. Ceci est particulièrement vrai pour des structures diffractives à basse fréquence spatiale comme celles produites par le procédé selon la présente invention.

Le procédé selon la présente invention diffère donc complètement de la méthode décrite dans la demande de brevet US 2005/0073748A1. Vu la méthode utilisée dans le US 2005/0073748, les vitesses et temps d'irradiation cités en utilisant un laser de puissance équivalente à celui décrit précédemment (1 Watt) conduisent à des temps de cycle de 40 minutes pour le marquage d'un code de 1 mm², et de 25s pour le marquage d'un code de 0,01mm². Ces valeurs sont incompatibles avec les applications visées dans notre brevet. Grâce à notre procédé, les vitesses de marquage sont améliorées d'un facteur supérieur à 1500 pour les codes millimétriques et supérieur à 500 pour les codes plus petits que 100 x 100µm.

Le laser femtoseconde pompé par diodes utilise de préférence un cristal dopé aux terres-rares, par exemple un cristal dopé à l'Ytterbium, ou est un laser à fibre, c'est-à-dire dont le coeur actif est une fibre dopée.

L'invention peut être utilisée pour:
■ l'industrie de la décoration : il est possible de réduire le temps de traitement du verre à quelques secondes, ce qui rend la productivité attractive pour les industries du parfum ou des boissons (vins, alcools,...) qui représentent des millions de bouteilles décorées par an, introduisant des concepts de décoration novateurs ne pouvant être obtenus avec des lasers YAG (impulsions ns);
■ les applications est possible d'écrire des codes individuels de manière filable à plus de 100 codes par seconde et de lire avec la même fiabilité ces signatures invisibles mais hautement contrastées à l'aide d'un système de vision à faible coût à la fois sur des lignes de production comme avec de nouveaux lecteurs à main et il est possible aussi d'inclure des données « cachées » dans des décorations complexes associées à des dispositifs de lecture adaptés;
■ le marquage normatif : il est possible d'écrire des références normatives qui sont indépendantes de la qualité du verre et qui peuvent être interprétées visuellement ou lues par des systèmes de vision simples. De plus il est possible de proposer un marquage direct dans les industries pharmaceutiques, chimiques, et de la boisson, sans modifier les propriétés mécaniques, donc sans microfissures, afin de maintenir l'intégrité du verre;
■ dans le domaine du marquage à l'intérieur d'un substrat en verre, plus particulièrement dans des flacons, dans des bouteilles de parfum, dans du vitrage automobile, dans du verre trempé ;
■ dans le domaine de l'identification d'un support de données tel que CD, DVD, ... par l'utilisation d'un identifiant qui peut être inséré sur la partie transparente du support (centre du disque) ou dans le packaging afin de garantir l'originalité du support, l'identifiant pouvant être une marque, un code ou le mélange des deux.

Le procédé selon l'invention permet le remplissage du marquage ou de l'identifiant par une structure diffractive, ce qui a l'avantage que les trajets de la lumière à travers l'objet transparent sont modifiés mais que la transparence de l'objet à marquer n'est pas supprimée, contrairement à une structure diffusante comme c'est le cas par exemple dans le brevet US2004032566.

Le dispositif permettant de mettre en oeuvre le procédé de la présente invention comprend un laser femtosecondes pompé par diodes et optimisé pour les grandes cadences des productions industrielles, celui-ci comprenant un amplificateur régénératif femtoseconde et n'utilisant pas d'amplification à dérive de fréquence, ainsi qu'un dispositif comprenant un tel laser, une tête galvanométrique, une optique de focalisation et un système de contrôle.

Pour plus de clarté, quelques exemples de réalisation d'un dispositif utilisable selon l'invention sont décrits ci-après à titre illustratif et non restrictif ainsi que le procédé selon l'invention pour le marquage interne par laser dans les matériaux transparents, référence étant faite aux dessins annexés dans lesquels:
La figure 1 est une vue schématique d'une installation laser avec un laser selon l'invention permettant le marquage interne d'un objet transparent par laser selon le procédé de l'invention ;
la figure 2 représente un laser ;
les figures 3 et 4 représentent des variantes de lasers ;
les figures 5 et 6 représentent respectivement les parties indiquées par F5 et F6 dans la figure 4;
les figures 7 et 8 montrent deux motifs diffractifs possibles pour le marquage d'un objet ;
la figure 9 montre des exemples d'identifiants d'un objet;

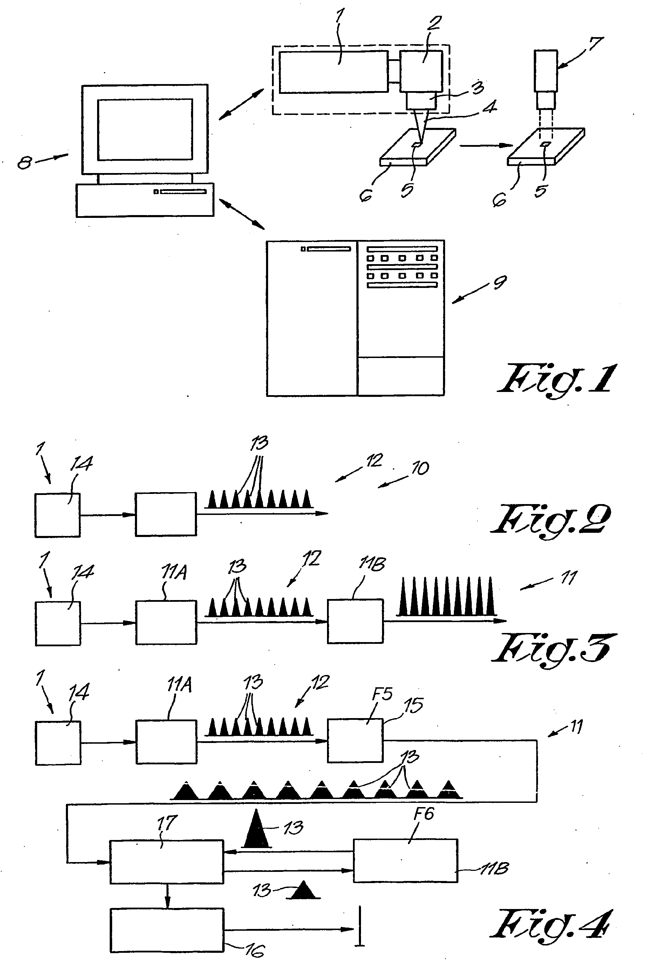

Comme représenté dans la figure 1, le procédé de l'invention utilise une installation laser qui comprend un laser femtoseconde pompé par diodes 1, un système de transport de faisceau 2, par exemple une tête galvanométrique, et de contrôle du design gravé, un système optique de focalisation 3 du faisceau laser 4 permettant de très faibles aberrations. Le marquage 5 ou design sous forme par exemple d'un identifiant, code, logo, décoration, est gravé à l'intérieur du matériau transparent 6 de l'objet à marquer sans aucune microfissure.

Le système de lecture 7 lira les informations comprises dans le marquage 5 ou le code gravé.

Un laser femtoseconde 1 est un laser pulsé, émettant des impulsions très courtes de lumière. Chaque impulsion a une durée très courte, typiquement de l'ordre de 10 à quelques centaines de femtosecondes (1 fs = 10⁻¹⁵ s).

L'utilisation d'impulsions si courtes pour le marquage offre 2 avantages principaux :
■ en raison de la très courte durée d'impulsion, aucun effet thermique n'apparaît durant le traitement, résultant en une haute qualité du marquage, sans création de microfissures ; et
■ en raison de la très haute puissance crête des impulsions, la puissance crête étant définie comme étant le rapport entre l'énergie d'une impulsion et sa durée, il est possible d'atteindre un marquage sur ou à l'intérieur des matériaux transparents.

Comme représenté dans les figures 2 et 3, il y a deux méthodes pour produire des impulsions femtosecondes de haute, énergie par un laser 1, c'est-à-dire à partir d'un oscillateur femtoseconde 10 ou à partir d'un amplificateur femtoseconde 11.

Un oscillateur laser femtoseconde 10 comme représenté dans la figure 2 produit typiquement un train 12 d'impulsions 13 de très faibles énergies de l'ordre du nanoJoule, mais à très haute fréquence, typiquement de 10 MHz à 100 MHz. Un oscillateur femtoseconde 10 comprend des sources de pompage laser 14 et un milieu actif (cristal, verre, fibre), un résonateur, et une partie oscillatrice 10A pour générer les impulsions 13 femtosecondes. De tels oscillateurs 10 peuvent produire des impulsions avec des énergies allant jusqu'à 500 nJ, ce qui peut être suffisant pour quelques applications.

Un amplificateur laser 11 comme représenté dans la figure 3 est utilisé si l'énergie de l'impulsion 13 est insuffisante pour une application particulière et comprend une partie oscillatrice 11A suivie d'une partie amplificatrice 11B et permet l'amplification de l'impulsion. Cependant, l'amplification directe d'impulsions femtosecondes 13 n'est pas toujours simple. Pendant l'amplification, la puissance crête de l'impulsion amplifiée peut devenir assez forte pour causer des dommages optiques aux composants de l'amplificateur.

Dans ce cas on peut utiliser un amplificateur 11 basé sur la technique dite à dérive de fréquence (Chirped Pulse Amplification ou CPA) qui est une technique bien connue qui est décrite par exemple dans l'article de Galvanauskas et al., Optics Letters 26, p. 935 (2001) et qui est destinée à réduire la puissance crête à l'intérieur de l'amplificateur. C'est un procédé en trois étapes qui est illustré à la figure 4:
■ la durée de l'impulsion 13 provenant de la partie oscillatrice 11A est augmentée dans un élargisseur d'impulsion 15, réduisant ainsi la puissance crête de l'impulsion 13;
■ l'impulsion 13 est amplifiée dans la partie amplificatrice 11B sans apparition de dommages grâce à la puissance crête réduite; et,
■ une fois tous les composants sensibles passés, la durée de l'impulsion 13 est ramenée à sa valeur initiale dans un compresseur d'impulsion 16 .

Ces amplificateurs 11 typiques peuvent augmenter l'énergie d'impulsion par 4 à 6 ordres de grandeurs. Cependant, amplifier à de tels niveaux d'énergie tout en gardant un fort taux de répétition de la partie oscillatrice 11A résulterait en des puissances moyennes impossible à maîtriser. Seule une impulsion 13 de la partie oscillatrice 11A est sélectionnée par un commutateur optique 17 pour l'amplification, résultant en une baisse du taux de répétition. Le schéma typique d'un laser femtoseconde amplifié à dérive de fréquence est illustré à la figure 4. Les différentes étapes de la génération d'impulsions femtosecondes par ces types de laser sont :
■ l'oscillateur laser 11A délivre une succession d'impulsions 13 courtes de faibles énergies ;
■ la durée d'impulsion est augmentée dans l'élargisseur d'impulsion 15;
■ le commutateur optique 16 extrait une impulsion 13 unique;
■ l'énergie de l'impulsion est augmentée dans l'amplificateur 11B;
■ le commutateur optique 16 extrait de l'amplificateur 11B l'impulsion de haute énergie; et finalement,
■ la durée de l'impulsion est réduite dans un compresseur d'impulsion 16.

Dans une configuration typique, à la fois l'oscillateur 10 et l'amplificateur 11 utilisent des matériaux ou cristaux dopés à l'Ytterbium en tant que composant actif. Des matériaux alternatifs sont dopés au Néodyme, ou à d'autres terres rares.

De même, typiquement, le commutateur optique 17 est un commutateur électro-optique, utilisant une cellule de Pockels. Dans des configurations alternatives, le commutateur optique 17 est un commutateur accousto-optique utilisant un modulateur accousto-optique.

Les caractéristiques typiques du faisceau laser 4 généré par l'amplificateur 11 sont :
- la durée d'impulsion est inférieure à 3 ps, par exemple 500 femtoseconde;
- l'énergie d'impulsion est supérieure à 1 µJ, par exemple 10 µJ;
- un taux de répétition supérieur à 10 kHz ; et
- une qualité de faisceau selon la norme TEM₀₀.

L'élargissement d'impulsions tire avantage du fait qu'une impulsion femtoseconde a un spectre intrinsèquement large.

La durée d'impulsion ΔT et la largeur Δv de son spectre sont liés par la relation ΔT.Δv > k, où k est une constante dépendante de la forme temporelle de l'impulsion.

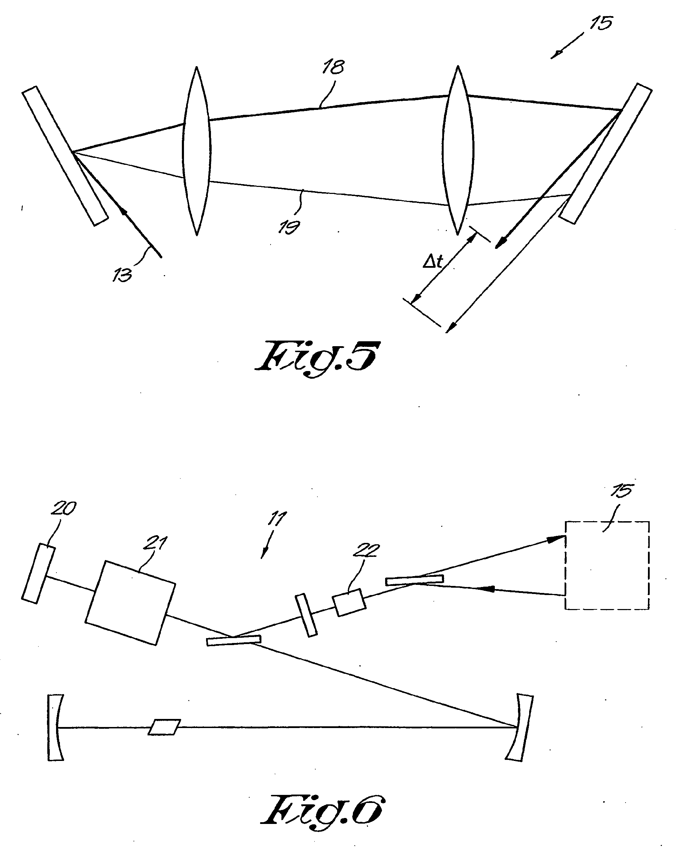

La figure 5 montre le principe de fonctionnement d'un élargisseur d'impulsion 15. La figure est présentée à titre d'illustration seulement, et n'est pas nécessairement le design réel utilisé dans le système. Dans cette figure, l'élargisseur d'impulsions 15 incorpore deux réseaux de diffraction, où chaque composante spectrale de l'impulsion femtoseconde 13 suit un chemin optique différent, respectivement 18 et 19.

Le chemin optique 18 vu par une longueur d'onde courte, qui est souvent appelée la partie « bleue » du spectre, est plus long que le chemin optique 19 vu par une longueur d'onde plus grande, appelée partie « rouge » du spectre. La partie « bleue » est ainsi retardée dans l'élargisseur d'impulsions 15.

A la sortie de l'élargisseur 15, les différentes composantes spectrales subissent une dérive.

Il est à noter que les termes « bleue » et « rouge » ne doivent pas être pris littéralement, la largeur spectrale des impulsions femtoseconde étant de l'ordre de quelques nanomètres, ce qui est loin de couvrir le spectre visible.

Comme il est représenté dans la figure 6, l'amplificateur laser 11 est un amplificateur régénératif, se composant d'un résonateur laser 20, dans lequel se propage une impulsion 13 temporairement élargie provenant de la partie oscillatrice 11A.

Un module de commutation 21 à cellule de Pockels piège une impulsion 13 unique provenant de la partie oscilatrice 11A dans l'amplificateur 11. Cette impulsion 13 est ensuite amplifiée par des allers-retours successifs dans l'amplificateur laser 15, contrairement à un amplificateur simple dans lequel il n'y a qu'un seul passage de l'impulsion.

Une fois que l'impulsion amplifiée a atteint le niveau d'énergie désiré, elle est extraite du résonateur par le même commutateur 21 à cellule de Pockels.

Un dispositif de routage optique, utilisant un rotateur Faraday 22, envoie ensuite l'impulsion de sortie dans le compresseur d'impulsion 16.

Les principaux avantages de l'amplification régénérative sont un rapport d'amplification élevé (typiquement supérieur à 6 ordres de grandeur), de même qu'une qualité de faisceau excellente (Faisceau gaussien TEM₀₀)

Le compresseur d'impulsions 16 ramène la durée de l'impulsion amplifiée à sa valeur initiale. Son principe est similaire à celui de l'élargisseur d'impulsion 15, excepté que dans ce cas, la partie « bleue » du spectre voit un chemin optique plus court que la partie « rouge ».

L'invention exclut l'utilisation de la technique de l'amplification à dérive de fréquence, car il est préférable de ne pas appliquer cette technique pour éviter l'utilisation d'un élargisseur et/ou d'un compresseur d'impulsion comme c'est le cas par exemple dans la demande de brevet US2003/0156605A1 avec une source laser n'utilisant pas d'amplificateur régénératif, mais utilisant soit l'amplification à dérive de fréquence soit l'amplification parabolique, tous les deux nécessitant un compresseur après le dernier stade d'amplification.

En effet, la génération de hautes puissances crêtes est limitée par les dommages induits par la haute puissance et l'utilisation de l'amplification à dérive de fréquence permet de repousser cette limitation, mais a quelques inconvénients pour le design du système, c'est-à-dire que l'élargisseur et le compresseur d'impulsions rendent le système plus complexe et que en plus, l'efficacité typique d'un compresseur n'est seulement que de l'ordre de 50 à 60 %, ce qui réduit significativement l'efficacité totale du système.

Avant que des dommages optiques n'apparaissent, la première limitation est due aux effets non-linéaires dans les composants optiques de l'amplificateur. Ces effets, et plus particulièrement l'auto-modulation en phase (Self-Phase Modulation ou SPM), entraînent un élargissement spectral et spatial d'une impulsion optique ultra-courte dus à la dépendance temporelle du décalage non-linéaire en phase, qui est une conséquence de la dépendance à l'intensité de l'indice de réfraction.

L'auto-modulation en phase est proportionnelle à la puissance crête de l'impulsion, et inversement proportionnelle à la taille du faisceau dans les composants optiques.

Ainsi, dans une configuration typique, la source laser 1 utilisée sera spécialement optimisée pour le marquage interne à grande vitesse, c'est-à-dire que:
■ l'énergie par impulsion 13 est suffisamment élevée pour permettre un marquage efficace, mais suffisamment basse pour ne pas nécessiter un élargisseur 15 et un compresseur d'impulsion 16;
■ le taux de répétition est élevé (> 100 kHz) pour garantir une vitesse de traitement élevée; et,
■ le laser 1 est un laser femtoseconde pompé par diodes, et bénéficie ainsi de tous les avantages décrits dans les paragraphes précédents.

Dans cette configuration, le laser 1 se composera donc de :
■ un oscillateur femtoseconde, délivrant une succession d'impulsions de haute énergie et de courte durée, à un taux de répétition élevé;
■ un amplificateur régénératif, utilisant un commutateur optique 17 afin de sélectionner une impulsion 13 seule provenant de l'oscillateur, de l'envoyer dans l'amplificateur, et de l'en extraire une fois l'amplification réalisée ; et,
■ un routeur optique, s'assurant que l'impulsion 13 provenant de l'oscillateur et allant dans l'amplificateur, et l'impulsion provenant de l'amplificateur, ne suivent pas le même chemin.

Dans cette configuration typique, l'amplificateur accepte directement une impulsion de l'oscillateur, c'est-à-dire une impulsion non étirée temporellement dans un élargisseur d'impulsion 15.

Le design du laser amplifié, permettant une amplification directe sans un besoin pour une amplification à dérive de fréquence, repose sur trois points:
■ minimiser le nombre de composants optiques dans le chemin optique du faisceau, les seuls composants contribuant significativement à la SPM étant les cellules de Pockels et le cristal laser dans la réalisation décrite ci-avant ;
■ minimiser la longueur optique du système, par exemple en choisissant des composants avec une longueur aussi faible que possible ;
■ maximiser la taille du faisceau dans les composants optiques.

Ces étapes ne sont pas évidentes et requièrent un design spécial : la réduction de la longueur du cristal est contrebalancé par l'efficacité du système par exemple.

Selon l'invention, le laser 1 est donc un laser femtoseconde pompé par diode qui est un amplificateur n'utilisant pas d'amplification à dérive de fréquence.

Le procédé pour le marquage interne par laser dans les matériaux transparents est illustré dans la figure 1.

Le marquage 5 sous forme d'un design ou d'un code est donné par l'ordinateur de contrôle 8 ou par le biais d'une interface reliée à une base de données ou un système ERP 9.

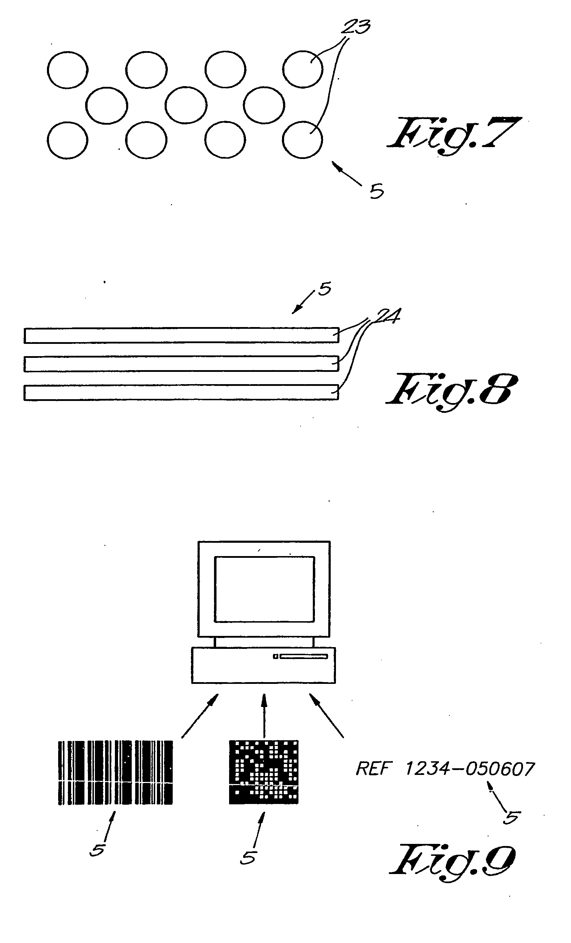

Le laser 1 rempli le design (datamatrix, numéro de série, logo) comme représenté dans les figures 7 et 8, avec une série de points,23 ou de lignes 24 respectivement, ou par des dessins ou formes répétitives, par focalisation du faisceau 4 à l'intérieur du matériau 6, la profondeur étant choisie par l'opérateur ou par le système lui-même grâce à un dispositif de mesure de distance.

Les points 23 sont définis par une ou plusieurs impulsions du laser, les caractéristiques des lignes 24 sont définies par la vitesse (à un taux de répétition fixé) du laser 1, donc par un nombre d'impulsions par ligne 24.

La distance entre les points 23 est contrôlée dans le but d'obtenir des codes visibles ou invisibles, mais avec un fort contraste pour un système de lecture ou de vision 7.

En fonction de la longueur d'onde et de la diffraction angulaire nécessaire pour le système de vision 7, on choisit un pas dans la gamme du spectre de longueurs d'onde du lecteur du système de vision qui est typiquement situé entre 0,5 et 10µm. Les marquages ou codes 5 peuvent être contrôlés après le traitement par un système de vision 7 avec ou sans éclairage spécial. Les marquages 5 ou codes peuvent être relus par une camera fixe ou un système de vision, ou par un lecteur manuel.

L'effet de l'impulsion laser est un changement d'indice localisé, permettant de créer une structure diffractive interne.

L'énergie, la densité d'énergie et le nombre d'impulsions sont optimisés pour obtenir des marquages ou codes 5 permanents.

La taille du spot est comprise entre 1 et 10 µm, ce qui permet une extrême précision. Un seul point 23 est invisible, mais l'ensemble de points ou lignes, et le motif répétitif entraîne un design absorbant ou une structure diffractive.

Pour obtenir un fort contraste, les points 23 ou lignes 24 décrivent un motif répétitif et sont de préférence séparés par une distance entre 0,5 et 10µm. Dans ce cas, la lumière sera diffractée, les codes 5 auront différentes couleurs selon l'angle de vision, et avec l'éclairage approprié, les codes seront très contrastés, allant jusqu'à plus de 75% (Grade A AIM).

Les codes 5 peuvent être si petits qu'ils ne sont pas visibles pour l'oeil sans microscope. Les codes 5 peuvent également être invisibles à la lumière du jour mais visibles à une longueur d'onde appropriée avec un système de vision 7 avec une caméra sensible à cette longueur d'onde, fournissant une signature anti-fraude.

Une matrice 2D 16 x 16 ne doit pas être plus grande que 60 x 60 µm, fournissant une quantité énorme de données (16 caractères alphanumériques - 10²⁴ références) et pouvant être lues.

La haute fréquence des lasers pompés par diode permet de faire des codes lisibles permanents en moins de 0,05 seconde, la limitation est due aux temps de calcul des ordinateurs.

Ainsi on peut par exemple graver un identifiant (5) en forme d'un datamatrix 2D lisible d'une taille inférieure à 0,4 x 0,4 mm en moins de 0,2 secondes.

Comme représenté dans la figure 9, les marquages 5 gravés peuvent être des logos, des textes, des numéros de série, des matrices 2D, par exemple des Datamatrix, des codes à barres, des codes spéciaux anti-fraude, tels que des codes Kezzler, ou un mélange de décoration et de codes.

Le code peut être incrémenté automatiquement par le système ou lié à un système de contrôle externe lui permettant une gestion de ces données. L'information décodée peut permettre une information directement utilisable, par exemple une date de péremption, ou par le biais d'une demande à la base de donnée interne à la société ou à une banque de donnée centralisée générale pour des codes anti-contrefaçon.

Les codes peuvent avoir des dimensions de seulement quelques dizaines de microns. Ils peuvent être très contrastés, par exemple entre 60 et 80% Grade A AIM pour un système de vision.

L'extrême précision du procédé permet d'avoir différents niveaux de sécurité : il peut être marqué un code normatif visible et un datamatrix invisible en même temps.

Un code visible marqué par un procédé selon l'invention peut comprendre d'autres informations destinées à l'expertise anti-fraude par exemple en utilisant un pixel du code normatif comme code datamatrix lisible uniquement avec un système de vision approprié (expertise optique) ou par l'utilisation des bits disponibles et non utilisés du code (expertise par utilisation d'un logiciel de décryptage dédicacé).

Des datamatrix anti-fraude peuvent être insérés dans un logo par exemple ou faire partie intégrante d'un nom de marque ou d'une marque déposée.

Des codes ou des logos peuvent avoir des effets surprenants tels que d'être invisible excepté pour un seul angle de vision, de changer de couleur en fonction de l'angle de vision, ou d'être visible seulement avec un éclairage approprié. Pour accroître encore la sécurité, l'angle de vue permettant la lecture de l'identifiant peut être distinctement modifié.

Les informations comprises dans un datamatrix peuvent être un code Kezzler sous forme d'une série de 16 caractères alphanumériques, fournissant une protection anti-fraude, optique et numérique (par logiciel).

Les informations comprises dans un datamatrix peuvent être lues par un lecteur standard et comprendre également quelques informations cachées pour un lecteur standard grâce aux bits non utilisés du datamatrix, ces informations cachées n'étant lues que combinées avec une clé logicielle appropriée.

L'aspect contre-façon peut être obtenu par la présence du logo ou de la marque, l'aspect esthétique de l'identifiant, le codage, l'information visible ou invisible associée ou non à un logiciel spécial de décryptage, ou un mélange de ces techniques permettant une copie économiquement non viable.

Le code normatif (visible) peut contenir différents niveaux d'information, par exemple, le code 050904-33245656-3-4 qui continent :
• des données destinées à l'utilisateur final, une date de péremption par exemple 4 septembre 2005 (050904);
• des données destinées à la gestion de la production 33245656 peut être un code individuel ou un numéro de lot lié à une banque de donnée permettant de contrôler les différents paramètres utilisés pour la production du produit marqué;
• une donnée (3-4) destinée à l'expertise contrefaçon directement exploitable par les experts soit par un logiciel approprié, soit parce qu'elle définit la position x=3, y=4 d'un code antifraude invisible réalisé par le même procédé et destiné à la gestion de la contrefaçon ou des circuits de distribution.

Les identifiants 5 pouvant être créés à différentes profondeurs, plusieurs codes peuvent être marqués mais à différentes profondeurs, rendant la possibilité de les supprimer presque impossible.

Un exemple d'un système de lecture 7 comprend une caméra , un objectif et un éclairage .

Le meilleur choix pour lire des codes gravés absorbants est un éclairage en champ clair sur un fond clair (white field) et le meilleur choix pour lire des codes diffractifs 5 est un éclairage avec fond noir (dark field)

Il est possible d'utiliser des systèmes de lecture ou de vision 7 fixes ou manuels. Les codes 5 peuvent également être détectés par une Webcam et analysés par un logiciel de vision par la suite.

La lecture peut être effectuée en ligne afin de vérifier les codes gravés 5, à n'importe quelle étape de la production ou dans un laboratoire pour une expertise future du produit.

Grâce au procédé selon l'invention, on peut atteindre un contraste de 75% (grade A - AIM : Automatic Identification Manufacturers, standard pour les datamatrix définis dans ISO/IEC18022).

Le code peut être une série spéciale de caractères alphanumériques étant référencée dans une base de données.

Il est évident que l'invention n'est nullement limitée aux exemples décrits ci-avant mais que de nombreuses modifications peuvent être apportées au procédé et au laser décrits ci-avant sans sortir du cadre de l'invention telle que définie dans les revendications suivantes.

## Revendications

1. Procédé de marquage interne par laser dans les matériaux transparents, par exemple pour le marquage d'un identifiant (5) pour un objet en matière transparente (6), **caractérisé en ce que** un dispositif est utilisé comprenant une source laser femtoseconde pompée par diodes (1) qui est un amplificateur régénératif femtoseconde et n'utilise pas d'amplification à dérive de fréquence; une tête galvanométrique (2); une optique de focalisation (3) et un système de contrôle (8) pour le marquage non agressif avec un haut contraste pour générer des impulsions laser (13) qui sont successivement focalisées sur différents points (23) du marquage (5) à réaliser pour réaliser des marquages transparents à grande vitesse, c'est-à-dire supérieure à 0,1 mm² par seconde par modification local de l'indice de réfraction du matériau transparent (6) de manière à ce que les modulations d'indices créés par l'effet d'auto-focalisation du faisceau sont d'amplitude variable selon la direction longitudinale, c'est-à-dire selon la direction de propagation des impulsions laser, créant une structure diffractive de manière à ce que le remplissage de l'identifiant (5) est une structure diffractive différente d'un réseau Bragg.

2. Procédé selon la revendication 1, **caractérisé en ce que** la source laser utilisée permet une vitesse de marquage supérieure à 1 mm² par seconde..

3. Procédé selon la revendication 1, **caractérisé en ce que** le laser femtoseconde pompé par diodes (1) utilise un cristal dopé à l'Ytterbium.

4. Procédé selon la revendication 1, **caractérisé en ce que** le laser femtoseconde pompé par diodes (1) est un laser à fibre, c'est-à-dire dont le coeur actif est une fibre dopée.

5. Procédé selon l'une quelconque des revendications précédentes, **caractérisé en ce que** le laser femtoseconde pompé par diodes (1) a un taux de répétition supérieur à 10 kHz, de préférence supérieur à 100 kHz.

6. Procédé selon l'une quelconque des revendications précédentes **caractérisé en ce que** le laser femtoseconde pompé par diodes (1) a une durée d'impulsion inférieure à 3 ps.

7. procédé selon l'une quelconque des revendications précédentes, **caractérisé en ce que** le laser femtoseconde pompé par diodes (1) a une énergie par impulsion supérieure à 3 µJ.

8. Procédé selon l'une quelconque des revendications précédentes, **caractérisé en ce que** l'identifiant (5) est de taille très petite, typiquement inférieure à 120 µm, et donc invisible à l'oeil nu.

9. Procédé selon l'une quelconque des revendications précédentes, **caractérisé en ce que** le marquage (5) est facilement lisible par un système de lecture ou de vision (7) standard.

10. Procédé selon l'une quelconque des revendications précédentes, **caractérisé en ce que** l'identifiant (5), par exemple un datamatrix 2D de 16 lignes x 16 colonnes, est encore plus petit que 60 x 60 µm.

11. Procédé selon l'une quelconque des revendications précédentes, **caractérisé en ce que** l'identifiant (5) est gravé en moins de 0,05 secondes.

12. Procédé selon l'une quelconque des revendications précédentes, **caractérisé en ce que** l'identifiant (5), par exemple un datamatrix 2D lisible d'une taille inférieure à 0,4 x 0,4 mm est gravé en moins de 0,2 secondes.

13. Procédé selon l'une quelconque des revendications précédentes, **caractérisé en ce que** l'identifiant (5) peut atteindre un contraste de 70% (grade A - AIM).

14. Procédé selon l'une quelconque des revendications précédentes, **caractérisé en ce que** l'identifiant (5) est rempli de lignes ou de points séparés entre eux par une distance de l'ordre du spectre en longueur d'onde du lecteur, comme un système de lecture (7) ou l'oeil d'un observateur.

15. Procédé selon l'une quelconque des revendications précédentes, **caractérisé en ce que** l'identifiant (5) comprend une partie normative (25) et une partie antifraude (26).

16. Procédé selon l'une quelconque des revendications précédentes, **caractérisé en ce que** l'identifiant (5) est inclus dans un design décoratif (29).

17. Procédé selon l'une quelconque des revendications précédentes, **caractérisé en ce que** quelques bits (26) des codes d'identification définissent la position d'un code antifraude invisible réalisé par le même procédé.

18. Procédé selon l'une quelconque des revendications précédentes, **caractérisé en ce que** l'identifiant (5) est marqué à l'intérieur d'un substrat en verre.

19. Procédé selon l'une quelconque des revendications précédentes, **caractérisé en ce que** l'identifiant (5) est marqué dans des flacons.

20. Procédé selon l'une quelconque des revendications précédentes, **caractérisé en ce que** l'identifiant (5) est marqué dans des bouteilles de parfum.

21. Procédé selon l'une quelconque des revendications précédentes, **caractérisé en ce que** l'identifiant (5) est marqué dans du vitrage automobile.

22. Procédé selon l'une quelconque des revendications précédentes, **caractérisé en ce que** l'identifiant (5) est marqué dans du verre trempé.

23. Procédé selon l'une quelconque des revendications précédentes, **caractérisé en ce que** l'identifiant (5) est intégré pour devenir une partie intégrante du nom d'une marque ou d'une marque déposée.

24. Procédé selon l'une quelconque des revendications précédentes, **caractérisé en ce que** plus d'un identifiant (5) est positionné à côté d'un autre mais à différentes profondeurs.

25. Procédé selon l'une quelconque des revendications précédentes, **caractérisé en ce que** l'angle de vue permettant la lecture de l'identifiant (5) peut être distinctement modifié pour accroître encore la sécurité.

26. Procédé selon l'une quelconque des revendications précédentes, **caractérisé en ce que** l'identifiant (5) est marqué à l'intérieur d'un support de donnée, tel que CD, DVD,,..., ou à l'intérieur de son packaging.

27. Procède selon l'une quelconque des revendications précédentes, **caractérisé en ce qu'**il utilse un système de vision (7) afin de vérifier les codes et un éclairage adapté (32).

28. Procédé selon l'une quelconque des revendications précédentes, **caractérisé en ce qu'**il est utilisé pour créer un code destiné à la lutte anti-contrefaçon.

29. Procédé selon l'une quelconque des revendications précédentes, **caractérisé en ce qu'**il est utilisé pour créer un code destiné au contrôle des circuits de distribution.

## Claims

1. Process for marking the interior of transparent materials by laser, for example to mark an identifier (5) for an object in transparent material (6), **characterised in that** a device is used comprising a diode-pumped femtosecond laser source (1), which is a femtosecond regenerative amplifier and does not use chirped pulse amplification; a galvanometric head (2); focusing optics (3) and a control system (8) for non-aggressive high-contrast marking, to generate laser pulses (13) that are successively focused on different points (23) of the mark (5) to be realised in order to make transparent marks at high speed, i.e. greater than 0.1 mm² per second by local modification of the refractive index of the transparent material (6) so that the index modulations created by the self-focusing effect of the beam are of a variable amplitude along the longitudinal direction, i.e. according to the direction of propagation of the laser pulses, thereby creating a diffractive structure, so that the filling of the identifier (5) is a diffractive structure different to a distributed Bragg network.

2. Process according to claim 1, **characterised in that** the laser source used enables a marking speed of greater than 1 mm² per second.

3. Process according to claim 1, **characterised in that** the diode-pumped femtosecond laser (1) uses a crystal doped with Ytterbium.

4. Process according to claim 1, **characterised in that** the diode-pumped femtosecond laser (1) is a fibre laser, i.e. the active core is a doped fibre.

5. Process according to any one of the previous claims, **characterised in that** the diode-pumped femtosecond laser (1) has a repetition frequency greater than 10 kHz, preferably greater than 100 kHz.

6. Process according to any one of the previous claims, **characterised in that** the diode-pumped femtosecond laser (1) has a pulse duration of less than 3 ps.

7. Process according to any one of the previous claims, **characterised in that** the diode-pumped femtosecond laser (1) has an energy per pulse of more than 3 µJ.

8. Process according to any one of the previous claims, **characterised in that** the identifier (5) is of a very small size, typically less than 120 µm, and thus invisible to the naked eye.

9. Process according to any one of the previous claims, **characterised in that** the mark (5) can be easily read by a standard reading or vision system (7).

10. Process according to any one of the previous claims, **characterised in that** the identifier (5), for example a 2D data matrix of 16 lines x 16 columns, is even smaller than 60 x 60 µm.

11. Process according to any one of the previous claims, **characterised in that** the identifier (5) is engraved in less than 0.05 seconds.

12. Process according to any one of the previous claims, **characterised in that** the identifier (5), for example a 2D readable data matrix with a size of less 0.4 mm x 0.4 mm, is engraved in less than 0.2 seconds.

13. Process according to any one of the previous claims, **characterised in that** the identifier (5) can achieve a contrast of 70% (grade A - AIM).

14. Process according to any one of the previous claims, **characterised in that** the identifier (5) is filled with lines or points separated from one another by a distance of the order of the wavelength spectrum of the reader, such as a reader system (7) or the eye of an observer.

15. Process according to any one of the previous claims, **characterised in that** the identifier (5) comprises a regulatory part (25) and an anti-fraud part (26).

16. Process according to any one of the previous claims, **characterised in that** the identifier (5) is incorporated in a decorative design.

17. Process according to any one of the previous claims, **characterised in that** some bits (26) of the identification codes define the position of an invisible anti-fraud code realised by the same process.

18. Process according to any one of the previous claims, **characterised in that** the identifier (5) is marked within a glass substrate.

19. Process according to any one of the previous claims, **characterised in that** the identifier (5) is marked within flasks.

20. Process according to any one of the previous claims, **characterised in that** the identifier (5) is marked within perfume bottles.

21. Process according to any one of the previous claims, **characterised in that** the identifier (5) is marked within car windows.

22. Process according to any one of the previous claims, **characterised in that** the identifier (5) is marked within toughened glass.

23. Process according to any one of the previous claims, **characterised in that** the identifier (5) is integrated to become an integral part of the name of a brand or registered trademark.

24. Process according to any one of the previous claims, **characterised in that** more than one identifier (5) is positioned next to another one, but at different depths.

25. Process according to any one of the previous claims, **characterised in that** the viewing angle that enables the identifier (5) to be read can be distinctly changed to further increase security.

26. Process according to any one of the previous claims, **characterised in that** the identifier (5) is marked inside a data medium, such as a CD, DVD, etc, or within its packaging.

27. Process according to any one of the previous claims, **characterised in that** it uses a vision system (7) to check the codes in suitable lighting (32).

28. Process according to any one of the previous claims, **characterised in that** it is used to create a code intended to combat counterfeiting.

29. Process according to any one of the previous claims, **characterised in that** it is used to create a code intended to control the distribution channels.

## Patentansprüche

1. Verfahren für das interne Markieren mittels Laser in durchsichtigen Materialien, zum Beispiel zwecks Markieren eines Kennzeichens (5) in einen Gegenstand aus durchsichtigem Material (6); das Verfahren lässt sich dadurch charakterisieren, dass eine Vorrichtung benutzt wird, die eine dioden-gepumpte Femtosekunden-Laser-Quelle (1) enthält, die ein regenerativer Femtosekunden-Verstärker ist und keine Verstärkung mit Frequenzabweichung benutzt; ein galvanometrischer Kopf (2); eine Fokussierungsoptik (3) und ein Kontrollsystem (8) für das nicht aggressive Markieren mit hohem Kontrast, um Laserimpulse (13) zu generieren, die daraufhin auf verschiedene Punkte (23) der durchzuführenden Markierung (5) fokussiert werden, um durchsichtige Markierungen mit hoher Geschwindigkeit vorzunehmen, d.h. mit einer Geschwindigkeit von über 0,1 mm² pro Sekunde, und zwar mittels lokaler Veränderung des Refraktionsindexes des durchsichtigen Materials (6) sodass die Indexmodulationen, die durch die Wirkung der Selbst-Fokussierung des Strahls erzeugt werden, eine variable Amplitude gemäß der Längsrichtung haben d.h gemäß der Richtung der Ausbreitung der Laserimpulse, wobei eine diffraktive Struktur erzeugt wird, sodass das Auffüllen des Kennzeichens (5) eine diffraktive Struktur ist, die sich vom Bragg-Gitter unterscheidet.

2. Verfahren nach Anspruch 1, **dadurch gekennzeichnet, dass** die benutzte Laser-Quelle eine Markierungsgeschwindigkeit von über 1 mm² pro Sekunde erlaubt.

3. Verfahren nach Anspruch 1, **dadurch gekennzeichnet, dass** der dioden-gepumpte Femtosekunden-Laser (1) einen Kristall, der mit Ytterbium angereichert ist, benutzt.

4. Verfahren nach Anspruch 1, **dadurch gekennzeichnet, dass** der dioden-gepumpte Femtosekunden-Laser (1) ein Faser-Laser ist, d.h. ein Laser, dessen aktiver Kern aus einer angereicherten Faser besteht.

5. Verfahren nach irgendeinem der vorhergehenden Ansprüche, **dadurch gekennzeichnet, dass** der dioden-gepumpte Femtosekunden-Laser (1) eine Wiederholungsrate von mehr als 10 kHz, vorzugsweise von mehr als 100 kHz, hat.

6. Verfahren nach irgendeinem der vorhergehenden Ansprüche, **dadurch gekennzeichnet, dass** der dioden-gepumpte Femtosekunden-Laser (1) eine Pulsdauer hat, die niedriger als 3 ps ist.

7. Verfahren nach irgendeinem der vorhergehenden Ansprüche, **dadurch gekennzeichnet, dass** der dioden-gepumpte Femtosekunden-Laser (1) eine Energie pro Impuls von mehr als 3 µJ hat.

8. Verfahren nach irgendeinem der vorhergehenden Ansprüche, **dadurch gekennzeichnet, dass** das Kennzeichen (5) von kleiner Größe ist, in der Regel von unter 120 µm, und somit für das bloße Auge unsichtbar ist.

9. Verfahren nach irgendeinem der vorhergehenden Ansprüche, **dadurch gekennzeichnet, dass** die Markierung (5) mithilfe eines Standard-Lese- oder Sichtungssystems (7) einfach gelesen werden kann.

10. Verfahren nach irgendeinem der vorhergehenden Ansprüche, **dadurch gekennzeichnet, dass** das Kennzeichen (5), zum Beispiel eine Datenmatrix 2D von 16 Linien x 16 Spalten, immer noch kleiner als 60 x 60 µm ist.

11. Verfahren nach irgendeinem der vorhergehenden Ansprüche, **dadurch gekennzeichnet, dass** das Kennzeichen (5) innerhalb von weniger als 0,05 Sekunden eingraviert wird.

12. Verfahren nach irgendeinem der vorhergehenden Ansprüche, **dadurch gekennzeichnet, dass** das Kennzeichen (5), zum Beispiel eine lesbare Datenmatrix 2D mit einer Größe von unter 0,4 x 0,4 mm innerhalb von weniger als 0,2 Sekunden eingraviert wird.

13. Verfahren nach irgendeinem der vorhergehenden Ansprüche, **dadurch gekennzeichnet, dass** das Kennzeichen (5) einen Kontrast von 70% erreichen kann (Grad A-AIM).

14. Verfahren nach irgendeinem der vorhergehenden Ansprüche, **dadurch gekennzeichnet, dass** das Kennzeichen (5) mit Linien oder Punkten aufgefüllt wird, die voneinander durch einen Abstand der Größenordnung des Spektrums in der Wellenlänge der Lesevorrichtung wie ein Lesesystem (7) oder das Auge eines Betrachters, getrennt sind.

15. Verfahren nach irgendeinem der vorhergehenden Ansprüche, **dadurch gekennzeichnet, dass** das Kennzeichen (5) einen normativen Teil (25) und einen der Betrugsbekämpfung dienenden Teil (26) enthält.

16. Verfahren nach irgendeinem der vorhergehenden Ansprüche, **dadurch gekennzeichnet, dass** das Kennzeichen (5) in ein Dekorations-Design (29) eingeschlossen ist.

17. Verfahren nach irgendeinem der vorhergehenden Ansprüche, **dadurch gekennzeichnet, dass** einige Bits (26) der Identifizierungscodes die Position eines unsichtbaren betrugssicheren Codes, der mithilfe desselben Verfahrens durchgeführt wird, bestimmen.

18. Verfahren nach irgendeinem der vorhergehenden Ansprüche, **dadurch gekennzeichnet, dass** das Kennzeichen (5) im Inneren eines Glassubstrats markiert wird.

19. Verfahren nach irgendeinem der vorhergehenden Ansprüche, **dadurch gekennzeichnet, dass** das Kennzeichen (5) innerhalb von Flakons markiert wird.

20. Verfahren nach irgendeinem der vorhergehenden Ansprüche, **dadurch gekennzeichnet, dass** das Kennzeichen (5) innerhalb von Parfumflaschen markiert wird.

21. Verfahren nach irgendeinem der vorhergehenden Ansprüche, **dadurch gekennzeichnet, dass** das Kennzeichen (5) innerhalb von Autoverglasung markiert wird.

22. Verfahren nach irgendeinem der vorhergehenden Ansprüche, **dadurch gekennzeichnet, dass** das Kennzeichen (5) innerhalb von gehärtetem Glas markiert wird.

23. Verfahren nach irgendeinem der vorhergehenden Ansprüche, **dadurch gekennzeichnet, dass** das Kennzeichen (5) integriert wird, um wesentlicher Namensbestandteil einer Marke oder einer eingetragenen Marke zu sein.

24. Verfahren nach irgendeinem der vorhergehenden Ansprüche, **dadurch gekennzeichnet, dass** das Kennzeichen (5) neben einem anderen Kennzeichen positioniert wird, allerdings in verschiedener Tiefe.

25. Verfahren nach irgendeinem der vorhergehenden Ansprüche, **dadurch gekennzeichnet, dass** der Sichtwinkel, der das Lesen des Kennzeichens (5) ermöglicht, deutlich verändert werden kann, zwecks größerer Sicherheit.

26. Verfahren nach irgendeinem der vorhergehenden Ansprüche, **dadurch gekennzeichnet, dass** das Kennzeichen (5) im Inneren eines Datenträgers wie CDs, DVDs, ...oder im Inneren seiner Verpackung markiert wird.

27. Verfahren nach irgendeinem der vorhergehenden Ansprüche, **dadurch gekennzeichnet, dass** es ein Sichtungssystem (7) zur Überprüfung der Codes sowie eine angepasste Beleuchtung benutzt.

28. Verfahren nach irgendeinem der vorhergehenden Ansprüche, **dadurch gekennzeichnet, dass** es für die Erstellung eines Codes benutzt wird, das für die Betrugsbekämpfung bestimmt ist.

29. Verfahren nach irgendeinem der vorhergehenden Ansprüche, **dadurch gekennzeichnet, dass** es für die Erstellung eines Codes benutzt wird, das für die Kontrolle der Vertriebswege bestimmt ist.
